(19) Europäisches Patentamt

European Patent Office

Office européen des brevets

(11) EP 0 663 897 B1

(12) EUROPEAN PATENT SPECIFICATION

(45) Date of publication and mention
of the grant of the patent:
**29.01.1997 Bulletin 1997/05**

(51) Int Cl.[6]: **C07B 57/00**, B01D 61/24,
B01D 11/04

(21) Application number: **93921917.6**

(22) Date of filing: **01.10.1993**

(86) International application number:
**PCT/EP93/02715**

(87) International publication number:
**WO 94/07814 (14.04.1994 Gazette 1994/09)**

(54) **PROCESS FOR SEPARATING ENANTIOMERS FROM A RACEMIC MIXTURE**

VERFAHREN ZUR TRENNUNG VON ENANTIOMEREN AUS EINER RACEMISCHEN MISCHUNG

PROCEDE DE SEPARATION D'ENANTIOMERES D'UN MELANGE RACEMIQUE

(84) Designated Contracting States:
**AT BE CH DE DK ES FR GB GR IE IT LI LU MC NL
PT SE**

(30) Priority: **07.10.1992 NL 9201729**

(43) Date of publication of application:
**26.07.1995 Bulletin 1995/30**

(73) Proprietor: **Akzo Nobel N.V.
6824 BM Arnhem (NL)**

(72) Inventor: **KEURENTJES, Johannes, Theodorus,
Faustinus
NL-6871 JN Renkum (NL)**

(74) Representative: **Schalkwijk, Pieter Cornelis et al
AKZO NOBEL N.V.
Patent Department (Dept. APTA)
P.O. Box 9300
6800 SB Arnhem (NL)**

(56) References cited:
EP-A- 0 085 023          WO-A-87/00165
WO-A-91/17816          GB-A- 2 233 248
US-A- 4 980 065

• SEPARATION SCIENCE AND TECHNOLOGY vol.
25, no. 7&8 , 1990 pages 941 - 951 T. TAKEUCHI
ET AL 'RESOLUTION OF DL-VALINE BY
COUNTERCURRENT SOLVENT EXTRACTION
WITH CONTINUOUS SAMPLE FEEDING'
• SEPARATION SCIENCE AND TECHNOLOGY vol.
23, no. 12 , 1988 pages 1735 - 1751 A. SENGUPTA
ET AL 'SEPARATION OF LIQUID SOLUTIONS BY
CONTAINED LIQUID MEMBRANES'

## Description

The invention relates to a process for separating enantiomers from a racemic mixture by countercurrent extraction using at least two liquids at least one of which is chiral or contains a chiral adjuvant.

Such a process is known from an article by Takeuchi et al. in <u>Sep. Sci. and Technol.,</u> 25(7&8), 941-951 (1990). The process described in this article is as follows: a mixture of enantiomers, notably DL-valine, is separated into 0-valine and L-valine, respectively, by countercurrent extraction using at least two immiscible liquids of differing chiralities.

To this end, in the case of DL-valine use is made of an enantioselective solvent extraction system consisting of n-butanol and water containing N-n-alkyl-L-proline or N-n-alkyl-L-hydroxyproline and copper(II) ions.

A drawback to the process described in said document is that there may be such deviation from 1 in the distribution of the enantiomers to be separated between the two immiscible liquids as will give rise to major processing technique problems. While it is possible to obtain favourable results with the known process on a preparative scale, its use on a technical scale still requires a lot of development. Moreover, novel enantioselective solvent extraction systems will have to be produced to separate other enantiomers.

Hence, there is great practical need for a process which will also permit effective separation of other groups of enantiomers. This applies equally for pesticides, fragrance agents, and a wide range of pharmaceutical preparations where the lack of a proper separating technique means that it is not known in some cases whether or not the distinguished enantiomeric compounds differ in effectiveness at all. In the case of some pharmaceutical preparations consisting of a racemic mixture, it is known that one optical isomer will have a particular desired physiological activity, while the other optical isomer in many instances will not only be inactive, but may even lead to objectionable, detrimental side-effects. As ever more is becoming known about such effects, the need for stereoselective preparation of commercial pharmaceutical products will be self-evident.

The invention now provides a process by which said need can be satisfied for the most part.
The invention is characterised in that in the process of the known type mentioned in the opening paragraph these liquids are wholly miscible and separated from each other by a phase with which they are immiscible.

The now proposed process has a twofold advantage: firstly, the step of separating the two partially miscible phases may be omitted, and secondly, the process according to the invention makes it possible to create a large number of equilibrium units in the extraction column.

According to the invention, favourable results may be obtained using a process in which the separating, immiscible phase is incorporated into a solid carrier. This solid carrier may consist of either a porous material or a solid, continuous membrane.

Preferably, a liquid is selected as the separating, immiscible phase. This liquid's polarity generally is the opposite of that of the two extracting liquids.

It should be noted that the separation of enantiomeric mixtures with the aid of a liquid with which they are immiscible has already been proposed in WO-91/17816. Unlike when the process according to the present invention is used, this separation is not obtained by extraction using at least two liquids one of which is chiral or contains a chiral adjuvant, but by incorporating a chiral carrier into the immiscible liquid.

The process proposed in this document has the drawback of requiring such a large number of steps for a well implemented separation that commercial-scale application may be expected to give problems.

Favourable results may likewise be obtained when a gas is used as the separating phase. Particularly when the enantiomeric materials to be separated are volatile, it may be attractive to employ a gas-filled, solid, porous carrier. As examples of volatile enantiomeric materials may be mentioned several aromatics and flavourings.

Solid carriers may be made of either an inorganic or an organic material.

Examples of inorganic carriers include $\alpha$-alumina, $\gamma$-alumina, carbon, ceramic material, or combinations thereof, such as alumina on a carrier of porous carbon.

Possible examples of solid carriers of organic materials that may be used according to the invention include microporous as well as continuous membranes. The minimum size of the pores in the former membranes is determined by the hydrodynamic volume of the molecules of the substance to be transferred. It can be stated that, as a rule, the minimum size of the pores should exceed the hydrodynamic volume of the substance to be transferred. In actual practice, the size of the pores will always be less than 0,1 mm and preferably less than 10 $\mu$m. When solid, continuous membranes are used, the substances to be separated should dissolve in them.

The shape of the membrane is not essential. One potential embodiment is a membrane in the form of a flat sheet separating the liquid phases. In another embodiment, two membranes in the form of films are wound spirally around one another, with care being taken to leave sufficient space between the two membranes. In view of the major technical advantages involved, it is preferred to use a hollow fibre membrane. Particularly when the polarity of the extracting liquids is the opposite of that of the side of the membrane facing those liquids, favourable results may be obtained using a process in which the solid carrier, depending on whether the liquid flowing around it has polar or apolar properties, is rendered hydrophilic or hydrophobic by the chemical route, say, by grafting with an acrylate comoound.
Preference is given here to a process in which the solid carrier, depending on whether the liquid flowing around it has polar or apolar properties, is rendered hydrophilic or hydrophobic by physical modification, for instance by treatment with a surface-active compound.

In making the membranes to be employed according to the invention use may be made of both non-thermoplastic polymers, such as cuprophane, cellulose acetate, cellulose triacetate, cellulose nitrate, polytetrafluoroethylene, polyacrylonitrile, or (regenerated) cellulose, and of thermoplastic materials, such as polyolefins, condensation polymers, oxidation polymers, and mixtures thereof. Examples of suitable polymers to make membranes from include low-pressure and high-pressure polyethylene, polypropylene, polystyrene, polyvinyl chloride, polyvinylidene chloride, acrylonitrile-butadiene-styrene-terpolymer, styrene-acrylonitrile-copolymer, styrene-butadiene-copolymer, poly(4-methyl-pentene-1), polybutene, polyvinyl butyral , chlorinated polyethylene, polyvinyl acetate, polyvinyl alcohol, polymethyl methacrylate, polymethyl acrylate, polyimide, polyvinyl disulphide, polyphenylene oxide, polyethylene terephthalate, polybutylene terephthalate, polyaramid, copolyetheresters based on butylene terephthalate and polyethylene oxide glycol having a molecular weight in the range of 800 to 6000, polyamide 6, polyamide 6,6, polyamide 11, polyamide 12, polycarbonate, polyether urea, polypiperazine, polypiperazine amide, polyvinyl pyrrolidone, polyether sulphone, polysulphone, and the polydimethyl siloxanes (PDMS).

The preparation of microporous membranes from thermoplastic polymers has been described in, int. al., US-A-4 098 901. For the preparation of hollow fibre membranes from thermoplastic polymers reference may be had to US-A-4 564 488.
Highly favourable results have also been obtained up to now by using a membrane of hollow cellulose fibres.

The hollow fibre membranes are commonly arranged in a hollow fibre module. Two different embodiments can be distinguished here. In the first embodiment, one phase comprising a liquid which is chiral or contains a chiral adjuvant flows through the hollow fibres and the other flows around them. The other embodiment has been described by Sengupta et al. in Sep. Sci. and Technol. 23(12&13), pp. 1735-1751, 1988, and is characterised in that one phase comprising a liquid which is chiral or contains a chiral adjuvant flows through one portion of the fibres, while the other flows through another portion. The space between the fibres in that case is part of the separating phase. Depending on the hydrophilic or hydrophobic character of the fibres and the polarity of the phase comprising a liquid which is chiral or contains a chiral adjuvant, the fibre wall is filled with the liquids which are chiral or contain a chiral adjuvant or with the separating, immiscible phase.

Particularly when the enantiomeric substances to be separated are volatile, it may be attractive to employ a gas-filled membrane. Examples of volatile enantiomeric substances include various aromatics and flavourings. When the latter, say, dissolve in water, the membrane selected may be a microporous, hydrophobic membrane of which the pores are filled with a gas.

According to the invention, preference is given to a membrane phase of miminum thickness. This will generally be in the range of 0,1 μm to 1 mm, with a membrane thickness in the range of 1 μm to 100 μm being preferred. When use is made of a hollow fibre module where one chiral phase flows through one portion of the fibres and the other chiral phase flows through another portion, the layer thickness of the immiscible phase constitutes the space between the two types of fibres, optionally augmented with twice the wall thickness of the porous carrier.

At least one of the extracting liquids should be chiral or contain a chiral adjuvant. Preference is given to a process in which each of the extracting liquids contains a chiral adjuvant, each of which has a different mirror image form.

In view of the treatment of the extracting liquids, preference is given to a process in which each of the extracting liquids is based on the same solvent.

Favourable results may be obtained when the extracting liquids are polar liquids, more particularly aqueous liquids. In that case, it is preferred to use an apolar liquid or a gas for the separating phase.

Highly favourable results were obtained using apolar, organic, water-immiscible or partially water-miscible liquids for the extracting liquids. In that case, it is preferred to use a polar liquid, more particularly an aqueous liquid, for the separating phase.

Examples of achiral extracting liquids suitable for use according to the invention include: water, trichlorofluoromethane, chloroform, carbon tetrachloride, trichloroethylene, dichloromethane, or various hydrocarbon compounds of the group of (cyclo)alkanes having at least 5 carbon atoms, alcohols having at least 6 carbon atoms, (cyclo)alkanones having at least 5 carbon atoms, and alkenes having at least 6 carbon atoms. Examples of suitable organic compounds include n-butyl benzene, o-n-butyl toluene, p-cumene, 1,4-diethyl benzene, diphenyl, diphenyl methane, ethyl benzene, o-ethyl toluene, isobutyl benzene, isopropyl benzene, 1-methyl naphthalene, n-nonyl benzene, n-propyl benzene, m-propyl toluene, o-propyl toluene, diphenyl ether, o-xylene, di(a-methylbenzyl)ether, 2-ethyl-2-methyl-1,3-dioxolane, 4-methyl tetrahydropyran, α-methylbenzyl dimethylamine, p-vinyl toluene, bromobenzene, p-chlorostyrene, o-dibromobenzene, p-dichlorobenzene, perchloroethylene, 1,1,1-trichloroethane, thiacyclopentane, N-ethyl morpholine, N-isopropyl morpholine, nitrobenzene, nitroethane, triglyceride of linoleic acid, methyl acrylate, vinyl chloride, benzyl acetone, methylisopropenyl ketone, propylene dichloride, N-ethyl aniline, ethyl benzoate, methacryl aldehyde, hexamethoxymethyl melamine, thiacyclopentane, diethyl phthalate, bromochloromethane, ethyl acetoacetate, cyclopentanone, 1,2-dichloroethane, tetrahydrofuran, acetophenone, benzylamine, thiophene, aminodiphenyl methane, white spirit, (cyclo)hexane, benzene, or toluene. At least one chiral adjuvant will have been incorporated into all of these liquids. Low-molecular weight compounds are commonly used as the chiral adjuvant, but dissolved chiral polymers or chiral biomolecules also qualify for use.

A very wide range of optically active compounds may be used as chiral adjuvants. Examples of these compounds, of which the corresponding salts and derivatives also may be mentioned, include:
1-aminoethylphosphonic acid, 2-bromopropionic acid, epichlorohydrin, seri ne, 2,3-diaminopropionic acid, propylene glycol, alaninol, 1-amino-2-propanol, aspartic acid, malic acid, tartaric acid, 5-(hydroxymethyl)-2-pyrrolidinone, proline, cis-3-hydroxyproline, trans-1,2-cyclopentane diol, 2-methylbutyric acid, α-hydroxyisovaleric acid, methyl-3-hydroxybutyrate, methyl β-hydroxyisobutyrate, arabinose, lyxose, ribose, xylose, prolinol, alanine ethyl ester, norvaline, valine, methionine, penicillamine, methionine sulphoxide, 2-pentanol, 2,4-pentane diol, arabitol, 2-methyl-1-butylamine, valinol, 1,2-diaminocyclohexane, 1-amino-2-(methoxymethyl) pyrrolidine, lysine, arginine, 2-hexanol, 2-methyl-2,4-pentane diol, leucinol, 2-fluorophenyl alanine, 3-fluorophenyl alanine, 5-fluorotryptophan, 5-hydroxytryptophan, 2-benzyloxy-1,3,4-butane triol, isopropyl noradrenaline, 1-(1-naphthyl)ethanol, 1-(1-naphthyl) ethylamine, trans-2-phenyl-1-cyclohexanol, thyroxine, menthyl acetate, N-(3,5-dinitrobenzoyl)-a-phenyl glycine, N-methyl ephedrine, 3,5-dinitro-N-(1-phenylethyl)-benzamide, α,α-diphenyl prolinol.

The process according to the invention allows for the separation of racemates of the most widely varying nature. The racemates may be compounds of the pharmacon group, as well as synthons, aromatics and flavourings, or pesticides.

Although, according to the invention, a very wide variety of optically active compounds may be used as chiral adjuvants for the separation of an even wider variety of racemic mixtures, the use of certain combinations of chiral adjuvants and racemic mixtures to be separated is greatly preferred. In general, eligible chiral adjuvants are those which display a strong interaction with the racemic substances to be separated. Such a strong interaction may be due to, e.g., a hydrogen bridge between the chiral adjuvant and the racemic compound. Alternatively, strong interactions may result from Coulomb or Van der Waals forces.

For the separation of racemic mixtures having a primary or secondary amino group, hydroxy group, and/or thiol group use may advantageously be made of chiral adjuvants having a (thio)carbonyl, amino, (thio)ether, hydroxy, or thiol group. Racemates having a tertiary amino group are readily separatable with the aid of a chiral adjuvant containing a primary or secondary amino group, a hydroxy group, or a thiol group.
Examples of racemic mixtures that can be separated in this manner include:

a) β-mimetica and β-blockers, such as isoprenaline, orciprenaline, terbutaline, phenoterol, salbutamol, hexoprenaline, ritodrine, dobutamine, isoetarine, pirbuterol, rimiterol, formoterol, isoxsuprine, carbuterol, xamoterol, salmeterol, propranolol, atenolol, metoprolol, timolol, pindolol, acebutolol, alprenolol befunolol, betaxolol, bevantolol, bisoprolol, bopindolol, carteolol, carvedilol, celiprolol, epanolol, esmolol, labetolol, levobunolol, metipranolol, oxprenolol, penbutolol, sotalol, and tertatolol.
b) α-hydroxyamines, such as norephedri ne, psi-norephedrine, ephedrine, psi-ephedrine, erythro-2-amino-1,2-diphenyl ethanol, threo-2-amino-1,2-diphenyl ethanol, erythro-1-amino-1-phenyl-2-propanol, threo-1-amino-1-phenyl-propanol, phenyl glycinol, threo-2-amino-1-phenyl-1,3-propane diol, and analogous compounds.
c) calcium antagonists, such as amlodipine, verapamil, diltiazem, bepridil, gallopamil, phelodipine, isradipine, nicardipine, nimodipine, nisoldipine, and nitrendipine.
d) antidepressants, such as butriptyline, citalopram, fluoxetine, mianserine, mirtazapine, oxitriptan, paroxetine, sertraline, tranylcypromine, and trimipramine.

For the separation of the aforementioned racemic mixtures use may advantageously be made of the following chiral adjuvants or compounds derived therefrom:
camphor-10-sulphonic acid, maleic acid, mandelic acid, α-methoxyphenyl acetic acid, α-methoxy-α-trifluoromethylphenyl acetic acid, tartaric acid, menthol, isopinocampheol, α-terpineol, camphor, fenchone, α-amino-ε-caprolactam, α-methyl benzylamine, ephedrine, norephedrine, and analogous compounds.

For the separation of racemic mixtures of carboxylic acids, thiocarboxylic acids, and sulphonic acids use may advantageously be made of chiral adjuvants containing a carbonyl, amino, or hydroxyl group. Preference is given in this case to compounds containing both a carbonyl and a hydroxyl group, or an amino as well as a carbonyl group. As examples may be mentioned derivatives of tartaric acid, mandelic acid, amino acids, amides, and organic acids.
Examples of racemic mixtures separable in this manner include:

a) anti-inflammatories, such as ibuprofen, ketoprofen, pirprofen, fenoprofen, flurbiprofen, tiaprofenic acid, and naproxen
b) Angiotensine Converting Enzyme (ACE)-inhibitors, such as benazepril, captopril, cilazapril, enalapril, enalaprilate, lisonopril, cilazapril, phosinopril, perindopril, quinapril, ramipril, and spirapril
c) aromatics, such as citronellic acid, 2-methylheptanoic acid, 2-methylhexanoic acid, 3-methylpentanoic acid, maleic acid, and thiolactic acid

d) pesticides, such as 2-bromomethylpropionic acid, 2,4-dichlorophenoxybutyric acid, 2,4-dichlorophenoxypropionic acid, camphanic acid, 2-hydroxymethylpropanoic acid, and 0-methylmandelic acid

e) amino acids

For the separation of the aforementioned mixtures use may advantageously be made of the following chiral adjuvants or compounds derived therefrom:
α-methyl benzylamine, 2-aminobutane, 2-aminobutanol, 1-(1-naphthyl)ethanol, 1-(2-naphthyl)ethanol, 1-(1-naphthyl)ethylamine, ephedrine and norephedrine, and analogous compounds. Very favourable results were obtained using tartaric acid, mandelic acid, the esters derived therefrom, and with amino acids and compounds derived therefrom.

It is possible to separate racemic mixtures of amino acids using amino acids as chiral adjuvants. Other eligible chiral adjuvants include chiral amines, acids, alcohols, ketones, and aldehydes. Particularly favourable results have been obtained so far using chiral amino acids or derivatives thereof, in which case a complex is formed with the aid of copper(II) ions, as well as using tartaric acid, mandelic acid, and derivatives thereof.

For the separation of racemic mixtures of (thio)esters, phosphoric esters, (thio)ketones, and (thio)aldehydes are employed with advantage chiral adjuvants containing a hydroxy or amino group.
Examples of racemic mixtures which may be separated in this manner include:

a) bornyl esters, carvyl esters, citronellyl esters, isobornyl esters, linalyl esters, terpinyl esters, and rhodinyl esters

b) 3-benzyl-4-heptanone, chiral lactones, 2-methyl-2-butenal, 3-mercapto-2-butanone, and 3-mercapto-2-pentanone

c) calcium antagonists, such as amlodipine, verapamil, diltiazem, bepridil, gallopamil, phelodipine, isradipine, nicardipine, nimodipine, nisoldipine, and nitrendipine

d) pesticides having a phosphoric ester group, such as cyanophenphos, diethyl malathion, phonophos, and leptophos.

To this end, the following compounds or their derivatives can be employed successfully as chiral adjuvants: α-phenyl ethylamine, α-methyl benzylamine, tartaric acid, mandelic acid, ephedrine, norephedrine, amino derivatives.

The process according to the invention may be carried out by means of a single extraction, but preferably takes place using a number of extracting units connected in series. In the case of countercurrent liquid-liquid fractionation of an equimolar racemic mixture using two liquid phases at least one of which is chiral or contains a chiral adjuvant, the ratio between the two enantiomers of the substance to be separated in the outgoing flow (R/S) can be calculated with the aid of formula (1):

$$\frac{R}{S} = \frac{[L_R/(L_R - 1)]\,[\exp((L_R - 1).NTU/L_R)-1/L_R]}{[L_S/(L_S - 1)]\,[\exp((L_S - 1).NTU/L_S)-1/L_S]} \qquad (1),$$

wherein NTU stands for the number of transfer units in the apparatus and $L_R$ and $L_S$ represent the extracting factors for the enantiomers R and S, respectively. $L_R$ and $L_S$ can be calculated with the aid of formulae (2) and (3):

$$L_R = m_R.F_e/F_f \qquad (2),$$

$L_S = m_S.F_e/F_f$ (3), wherein $F_e$ and $F_f$ represent the volume flows of the extracting phase and the feed phase in which the racemate to be separated is dissolved, respectively, and $m_R$ is the coefficient of distribution of the R enantiomer over the feed and extracting phases, and $m_S$ stands for the coefficient of distribution of the S enantiomer over the feed and extracting phases.

The invention will be further illustrated with reference to the following examples, in which it is shown, int. al., that using the process according to the invention a purity in excess of 99% can be achieved when separating a mixture of two enantiomers. In addition, a number of figures have been included to further elucidate the invention.
Needless to say, the unlimitative examples are submitted for a better understanding of the invention only.

Fig. 2    shows a set-up for determining the distribution coefficients $m_R$ and $m_S$ using a hollow fibre module

Fig. 3    shows a set-up for a "single pass" countercurrent treatment in a hollow fibre module

Fig. 4    shows an analogous set-up to that of Fig. 3, except that in this case a number of hollow fibre modules have been connected in series

Fig. 5    shows a set-up for separating a mixture of enantiomers into the two separate enantiomers

Fig. 6    gives the analytical data of a separation carried out using the set-up according to Fig. 5

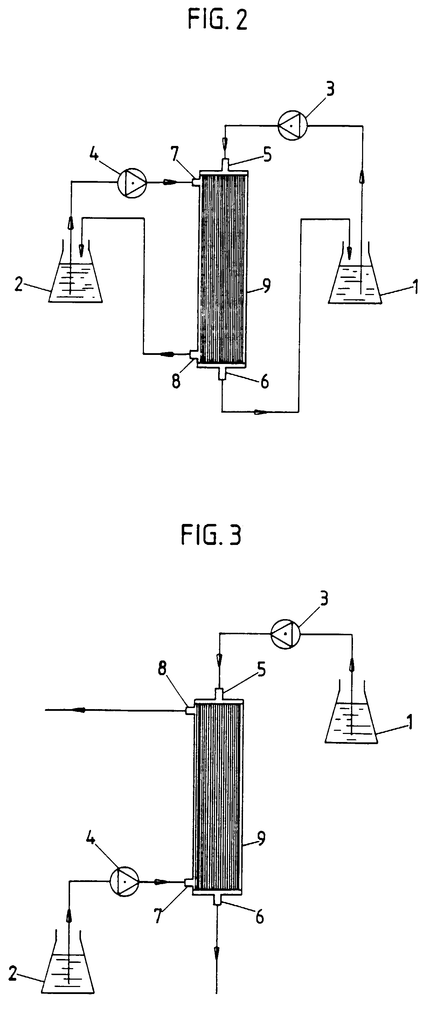

In Fig. 2, the aforementioned hollow fibre module is indicated in general with 9. During the measuring the module is positioned vertically and filled in longitudinal direction with hollow fibres of which the hollow ends open into the connections 5 and 6. Connection 5 is linked, via pump 3, with a duct opening into vessel 1, which holds a liquid containing chiral adjuvant 1. After having been passed through the lumen of the fibres, the latter liquid flows back into vessel 1 through connection 6. The liquid which contains chiral adjuvant 2 and the racemate to be separated are present in vessel 2, from whence the mixture is fed to the hollow fibre module via pump 4 and connection 7. This mixture is returned to vessel 2 through connection 8.

Fig. 3 shows a set-up comparable to that of Fig. 2, with the proviso that the liquids containing the chiral adjuvants have opposite directions of flow in the hollow fibre module, so that there is no longer any question of the chiral adjuvant-containing liquids being returned to either of the vessels 1 and 2. Via pump 3, connection 5 is linked to a duct opening into vessel 1, which holds a liquid containing chiral adjuvant 1 and the racemate to be separated. Vessel 2 holds the same liquid, this time containing chiral adjuvant 2. This liquid is fed to the hollow fibre module via pump 4 and connection 7, and then discharged again via connection 8. The partially separated mixture leaves the module through connection 6.

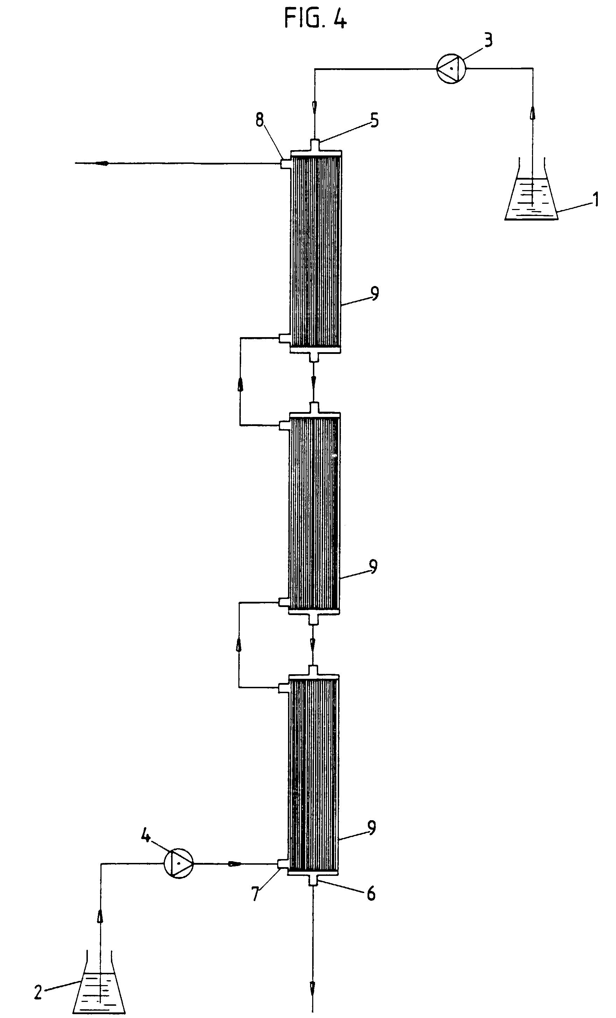

Fig. 4 shows a set-up comparable to that of Fig. 3, with the proviso that in this case there are three hollow fibre modules connected in series.

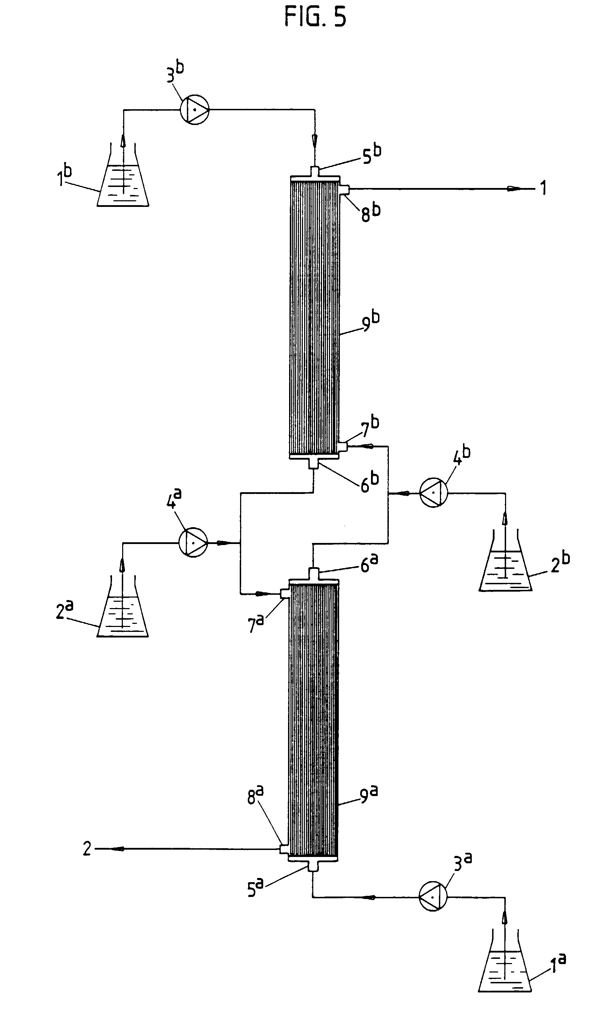

Fig. 5 shows a set-up comparable to that of Fig. 4, with the proviso that this time the system for separating a mixture of enantiomers into the individual components has a symmetrical construction. A further difference from the set-up depicted in Fig. 4 is that the liquids containing chiral adjuvant and racemic mixture are not passed through the lumen of the hollow fibres but around it, in a manner analogous to that indicated in Fig. 2. Thus, it is the liquids containing the chiral adjuvants which are passed through the lumen of the fibres. The separated substances 1 and 2 finally leave the modules through the connections 8a and 8b, respectively.

Example I

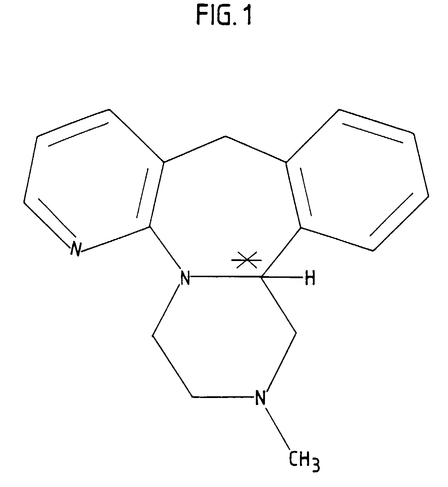

A mixture of enantiomers of compound A of the structural formula indicated in Figure 1 first had its distribution coefficient m determined in a set-up such as is indicated schematically in Fig. 2. To this end, first an aqueous 0,15 M citric acid/$Na_2HPO_4$-containing buffer liquid of pH = 1,7 was made to flow through the hollow cuprophane fibres of a hollow fibre module 9, which buffer liquid was then replaced by a solution of 10 wt.% of S,S-dibenzoyl tartaric acid in decanol. In the space around the fibres there was also a decanol solution, this one containing 10 wt.% of R,R-dibenzoyl tartaric acid. After 10 mg/ml of compound A had been added to the latter in vessel 2, the two solutions were subjected to a recirculation process. Intermittently, the distribution of the two enantiomers of compound A was determined. The distribution coefficients of the two enantiomers, viz. 1,06 and 0,94, could be derived from the values measured at equilibrium. Because of the symmetry of the system ($m_R = 1/m_S$), all of the examples below include the outcome of the determination of just one distribution coefficient

Example II

The value of the distribution coefficient determined in accordance with Example I was found to be wholly similar to that obtained by an entirely different route, viz. by determining the equilibrium distribution of the racemic mixture between the two immiscible phases, one of which had a chiral adjuvant dissolved therein. Next, the distribution coefficient was calculated by dividing the enantiomer ratio in the one phase by that of the enantiomer ratio in the other phase.

The determination of the coefficient of distribution of compound A over the water/decanol system in the presence of 10 wt.% of R,R-dibenzoyl tartaric acid was as follows. First, 5 ml of an aqueous 0,15 M citric acid/$Na_2HPO_4$-containing buffer solution were intimately admixed, in a tightly closable 15 ml bottle, with 5 ml of the decanol solution containing 10 mg/ml of compound A and 10 wt.% of R,R-dibenzoyl tartaric acid. After phase separation the enantiomer ratio of compound A in the two phases was determined. The ratio of the thus obtained values was found to correspond fully to the values of 1,06 and 0,94, respectively, listed in Example I.

Example III

In a manner analogous to that disclosed in Example II the distribution coefficient of norephedrine was determined in a system composed of an aqueous phase containing an 0,1 M phosphate buffer (pH 7) and an organic phase of 10 wt.% of D-dihexyl tartrate in heptane.

The determination was carried out in a manner analogous to that disclosed in Example II. To this end 4 mg of norephedrine were dissolved in 5 g of phosphate buffer in a tightly closable 15 ml bottle. 5 mg of organic phase were added thereto, after which, following shaking overnight in a shaker (Mini-Shaker, Adolf Kühner AG, Switzerland) at 300 rpm, the amounts of active component in the aqueous phase and the organic phase were found to have attained equilibrium. After full demixing the two phases were separated, and the norephedrine was extracted from the organic phase with the aid of 1,3 g of citrate buffer (0,1 M; pH 3). Using capillary zone electrophoresis, the enantiomer ratios of the norephedrine were determined for both the aqueous and the extracted organic phase. Under these conditions, a percentage of 5% of norephedrine was measured in the organic phase and the distribution coefficient value calculated was 1,19.

In an analogous manner, the distribution coefficient of norephedrine was determined in a system composed of an aqueous phase containing 0,04 M Na phosphorus hexafluoride ($NaPF_6$) in 0,1 M of citrate buffer (pH 3) and an organic phase consisting of 10 wt.% of D-dihexyl tartrate in heptane. After equilibrium had been attained and demixing, the two phases were separated, and norephedrine was extracted from the organic phase using 1,3 g of phosphate buffer ( 0,1 M, pH 2). Again, the enantiomer ratios were determined for both the aqeous and the organic phase using capillary zone electrophoresis.

Under these conditions, the percentage of norephedrine in the organic phase was 4% and the distribution coefficient value calculated was 1,1.

In an analogous manner, the distribution coefficient of norephedrine was calculated in a system composed of an aqueous phase containing an 0,1 M phosphate buffer (pH 7) and an organic phase of 10 wt.% of poly-L-lactic acid in chloroform.

Distribution coefficients of 1,07 at room temperature and 1,10 at 4°C were measured.

### Example IV

In a manner analogous to that disclosed in Example III the distribution coefficient of a racemic mixture of ibuprofen was determined in a system composed of an aqueous phase containing an 0,1 M phosphate buffer (pH 7) and an organic phase of 4 wt.% of D-dihexyl tartrate in heptane. Again, the enantiomer ratios were determined for both the aqueous and the organic phase using capillary zone electrophoresis.

Under these conditions, a percentage of 76% of ibuprofen was measured in the aqueous phase and the distribution coefficient value calculated was 1,10.

### Example V

In a manner analogous to that disclosed in Example III the distribution coefficient of a racemic mixture of terbutaline was determined in a system composed of an aqueous phase containing 5 wt.% of sodium metabisulphite in a 1N ammonium chloride buffer (pH 9,5) and an organic phase composed of a solution of 50 wt.% of dimethyl-2,3-0-isopropylidene-L-tartrate in cyclopentanone.

The determination of the coefficient of distribution of the terbutaline over the system of water/50 wt.% dimethyl-2,3-0-isopropylidene-L-tartrate in cyclopentanone was carried out as follows. First, 5 mg of terbutaline were dissolved in 5 g of aqueous phase in a tightly closable 15 ml bottle. After the addition thereto of 5 g of organic phase the whole was shaken overnight in a shaker at 300 rpm. The amounts of active component in the aqueous phase and the organic phase were then found to have attained equilibrium. After full demixing the two phases were separated, and terbutaline was extracted from the organic phase with the aid of 0,05 M tris(hydroxymethyl)aminomethane buffer and brought to pH 2,5 with phosphoric acid. Using capillary zone electrophoresis, the enantiomer ratios of terbutaline were determined for both the aqueous phase and the extracted organic phase. Under these conditions, the percentage of terbutaline in the organic phase was 25% and the selectivity was 1,02.

### Example VI

In a manner analogous to that disclosed in Example V the distribution coefficient of a racemic mixture of terbutaline was determined in a system composed of an aqueous phase containing 5 wt.% of sodium metabisulphite in a 1N ammonium chloride buffer (pH 9,5) and an organic phase consisting of a solution of 10 wt.% of fenchone in pentanone.

The procedure was as follows. First, 5 mg of terbutaline were dissolved in 5 g of aqueous phase in a tightly closable 15 ml bottle. After the addition thereto of 5 g of organic phase the whole was shaken overnight in a shaker at 300 rpm. The amounts of active component in the aqueous phase and the organic phase were then found to have attained equilibrium. After full demixing the two phases were separated, and terbutaline was extracted from the organic phase with the aid of 0,05 M tris(hydroxymethyl)aminomethane buffer and brought to pH 2,5 with phosphoric acid. Using capillary zone electrophoresis, the enantiomer ratios of terbutaline were determined for both the aqueous phase and the extracted organic phase. Under these conditions, the percentage of terbutaline in the organic phase was 30% and the selectivity was 1,02.

### Example VII

In a manner analogous to that disclosed in Example V the distribution coefficient of a racemic mixture of phenyl glycine was determined in a system composed of an aqueous phase containing 0,1 M of carbonate buffer (pH 9,5) and an organic phase of a solution of 50 wt.% of dihexyl tartrate in heptane.

The procedure was as follows. First, 5 mg of phenyl glycine were dissolved in 5 g of aqueous phase in a tightly closable 15 ml bottle. After the addition thereto of 5 g of organic phase the whole was shaken overnight in a shaker at 300 rpm. The amounts of active component in the aqueous phase and the organic phase were then found to have attained equilibrium. After full demixing the two phases were separated, and phenyl glycine was extracted from the organic phase with the aid of 0,01 M of perchloric acid (pH 2). The enantiomer ratios of phenyl glycine for the aqueous and the organic phase were determined with the aid of high pressure liquid chromatography, using a Crownpak CR+-stationary phase (Daicel Chem. Ind., Japan), an 0,01 M perchloric acid (pH 2) mobile phase having a flow of 1 ml/min, and UV detection at 254 nm. Under these conditions, the percentage of phenyl glycine in the organic phase was 3% and the selectivity was 1,06.

### Example VIII

In a manner analogous to that disclosed in Example III the distribution coefficient of a racemic mixture of propranolol was determined in a system composed of an aqueous phase containing an 0,1 M citric acid/citrate buffer solution (pH 3,5) and an organic phase consisting of 10 wt.% of D-dihexyl tartrate in heptane. Again, the enantiomer ratios for the aqueous and the organic phase were determined by means of capillary zone electrophoresis.

Under these conditions, a percentage of 40% of propranolol was measured in the organic phase and the distribution coefficient value calculated was 1,03.

Example IX

In a manner analogous to that disclosed in Example III, the distribution coefficient of a racemic mixture of salbutamol was determined. In order to render incorporation by the strongly apolar phase as heptane possible, use was made of a lipophilic anion forming a complex with the component to be separated. Into the aqueous phase were now incoporated 0,018 M of Na tetraphenyl borate (NaTFB), while the organic phase contained 10 wt.% of D-dihexyl tartrate in heptane. Again, the enantiomer ratios for the aqueous and the organic phase were determined by means of capillary zone electrophoresis.

Under these conditions, a percentage of 24% of salbutamol was measured in the organic phase and the distribution coefficient value calculated was 1,06.

Example X

In a manner analogous to that disclosed in Example III the distribution coefficient of a racemic mixture of salbutamol was determined in an aqueous phase containing 0,0035 M of Na tetraphenyl borate (NaTFB) and an organic phase containing 10 wt.% of D-dihexyl tartrate in cyclohexane. After full demixing the two phases were separated, and salbutamol was extracted from the organic phase with the aid of an aqueous solution of 1,3 g of NaOH (0,1 M). Again, the enantiomer ratios for both the aqueous phase and the organic phase were determined by means of capillary zone electrophoresis.

Under these conditions, a percentage of 6% of salbutamol was measured in the organic phase and the distribution coefficient value calculated was 1,04.

Example XI

The experiment of Example I was repeated, except that this time the distribution coefficient of compound A was determined in a hexane solution into which 10 wt.% of R,R-dihexyl tartrate and 10 wt.% of S,S-dihexyl tartrate, respectively, had been incorporated. From the values measured in a state of equilibrium a distribution coefficient value of 1,05 could be calculated.

Example XII

In a manner analogous to that disclosed in Example I first an aqueous solution containing 0,5 mole/l of $NaPF_6$ was made to flow through the hollow cuprophane fibres of a hollow fibre module. Next, this aqueous phase was replaced by a solution of 10 wt.% of S,S-dihexyl tartrate in hexane. In the space around the fibres there was also a hexane solution, this one containing 10 wt.% of R,R-dihexyl tartrate. After 10 mg/ml of norephedrine had been added to the latter, the two solutions were subjected to a recirculation process. From the values measured at equilibrium a distribution coefficient value of 1,2 could be calculated.

Example XIII

The example below shows that it is possible to separate a 50/50 mixture of enantiomers of compound A with the aid of a hollow cuprophane fibres-containing hollow fibre module if the two organic phases are not subjected to a recirculation process to determine the distribution coefficient as in Examples I, VIII, and IX, but flow countercurrently through the hollow fibre membrane module in "single pass" as specified in Fig. 3. The hollow fibre membrane module employed had a length of 18 cm and contained about 4200 fibres.

After an aqueous 0,15 M citric acid/$Na_2HPO_4$-containing buffer liquid of pH = 3,5 further incorporating 0,1 mM of dimethyl ammonium bromide (DTAB) had first been made to flow through the hollow fibres, the aqueous phase between the fibres was replaced by a water-saturated solution of 10 wt.% of R,R-dihexyl tartrate in heptane. The aqueous phase in the lumen of the fibres was replaced by a water-saturated solution of S,S-dihexyl tartrate in heptane further incorporating 2 mg/ml of the mixture of enantiomers of compound A. Next, the two heptane solutions were passed through the module in and around the fibres countercurrently and without recirculation, at volume flows through and around the fibres of 11,7 and 12,8 ml/hour, respectively. In the outgoing flow of the S,S-dihexyl tartrate-containing solution the ratio between the two enantiomers of compound A was 82/18.

Example XIV

In a manner analogous to that indicated in Example XIII a countercurrent extraction was carried out using a mixture of enantiomers of norephedrine, in which process first an aqueous solution containing a phosphate buffer (pH = 7,8) and 0,1 M of DTAB was made to flow through the hollow cuprophane fibres. The S,S-dihexyl tartrate solution this time contained 4 mg/g (50/50) of racemic norephedrine. The volume flow through and around the fibres was 10,3 and 18,1 ml/hour, respectively, resulting in an enantiomer ratio of 82/18 in the outgoing S,S-dihexyl tartrate-containing solution.

## Example XV

The extraction of Example XIV was repeated, except that instead of one hollow fibre module being used, three hollow fibre modules were connected in series, as depicted schematically in Fig. 4. This resulted in an enantiomer ratio of 98/2 in the outgoing S,S-dihexyl tartrate-containing solution.

## Example XVI

The example below shows that it is possible to separate a mixture of enantiomers into the R and S components using a set-up such as depicted schematically in Fig. 5. The columns indicated with the reference numerals 9a and 9b in that case each represent 7 hollow fibre modules connected in series. The hollow fibre modules were of the same type as is indicated in Example X. The vessels 1a and 1b were filled with 10 wt.% solutions in heptane of R,R-dihexyl tartrate and S,S-dihexyl tartrate, respectively. The vessels 2a and 2b were filled with 4 mg/ml of racemic norephedrine dissolved in 10 wt.% solutions in heptane of S,S-dihexyl tartrate and R,R-dihexyl tartrate, respectively. The following pump settings were used:

3a: 97 ml/hour
3b: 100 ml/hour
4b 4 ml/hour
4a: 4 ml/hour

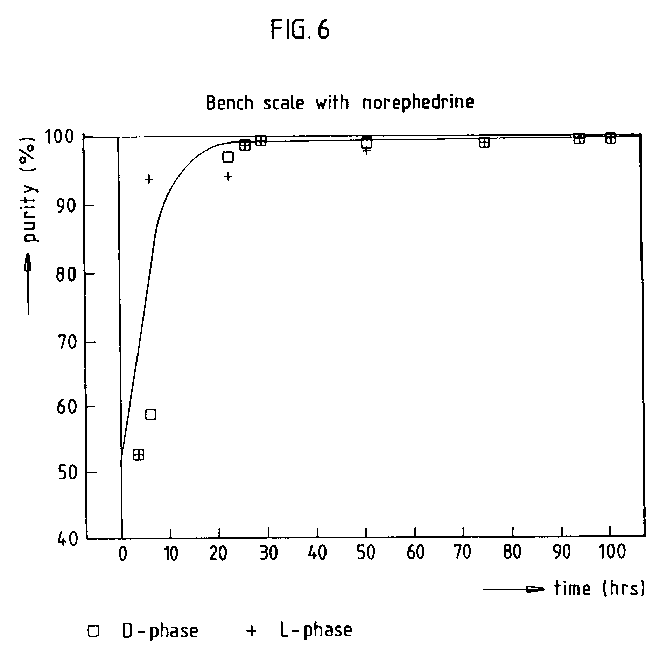

The flows 1 and 2 passing out through 8b and 8a had their enantiomer ratios determined. The result of these determinations is shown in Fig. 6. It is clear from this figure that after reaching the equilibrium setting, the two flows each have an optical purity of more than 99%, one flow containing in excess of 99% of D-norephedrine and the other containing in excess of 99% of L-norephedrine. This set-up permitted the separation into its two enantiomers of 768 mg of racemic norephedrine a day.

## Claims

1. A process for separating enantiomers from a racemic mixture by countercurrent extraction using at least two liquids at least one of which is chiral or contains a chiral adjuvant, characterised in that said liquids are wholly miscible and separated from each other by a phase with which they are immiscible.

2. A process according to claim 1, characterised in that the separating, immiscible phase is incorporated into a solid porous carrier.

3. A process according to claim 1, characterised in that the separating phase is a liquid.

4. A process according to claim 1, characterised in that the separating phase is a gas.

5. A process according to claim 1, characterised in that the separating, immiscible phase is a solid, continuous membrane, preferably in the form of a hollow fibre.

6. A process according to claim 2, characterised in that the solid, porous carrier is a microporous membrane, preferably in the form of a hollow fibre.

7. A process according to claim 5 or 6, characterised in that the solid carrier, depending on whether the liquid flowing around it has polar or apolar properties, is rendered hydrophilic or hydrophobic by the chemical route.

8. A process according to claim 5 or 6, characterised in that the solid carrier, depending on whether the liquid flowing around it has polar or apolar properties, is rendered hydrophilic or hydrophobic by physical modification, for instance by treatment with a surface-active compound.

9. A process according to claim 1, characterised in that each of the extracting liquids contains a chiral adjuvant, each of which has a different mirror image form.

10. A process according to claim 9, characterised in that each of the extracting liquids is based on the same solvent.

11. A process according to claim 1, characterised in that the extracting liquids are polar liquids.

12. A process according to claim 11, characterised in that the separating phase is an apolar liquid or a gas.

13. A process according to claim 1, characterised in that the extracting liquids are apolar, organic, water-immiscible, or partially water-miscible liquids.

14. A process according to claim 13, characterised in that the separating phase is a polar liquid, more particularly an aqueous phase.

## Patentansprüche

1. Verfahren zum Trennen von Enantiomeren aus einer racemischen Mischung durch Gegenstromextraktion unter Verwendung von mindestens zwei Flüssigkeiten, von denen mindestens eine chiral ist oder ein chirales Adjuvans enthält, dadurch gekennzeichnet, dass die Flüssigkeiten vollständig mischbar und von einander durch eine Phase getrennt sind, mit welcher sie nicht mischbar sind.

2. Verfahren nach Anspruch 1, dadurch gekennzeichnet, dass die trennende, nicht mischbare Phase in einen festen, porösen Träger eingearbeitet ist.

3. Verfahren nach Anspruch 1, dadurch gekennzeichnet, dass die trennende Phase eine Flüssigkeit ist.

4. Verfahren nach Anspruch 1, dadurch gekennzeichnet, dass die trennende Phase ein Gas ist.

5. Verfahren nach Anspruch 1, dadurch gekennzeichnet, dass die trennende, nicht mischbare Phase eine feste kontinuierliche Membran ist, vorzugsweise in Form einer Hohlfaser.

6. Verfahren nach Anspruch 2, dadurch gekennzeichnet, dass der feste poröse Träger eine mikroporöse Membran ist, vorzugsweise in Form einer Hohlfaser.

7. Verfahren nach Anspruch 5 oder 6, dadurch gekennzeichnet, dass der feste Träger in Abhängigkeit davon, ob die umfliessende Flüssigkeit polare oder apolare Eigenschaften hat, auf chemischem Wege hydrophil oder hydrophob gemacht wird.

8. Verfahren nach Anspruch 5 oder 6, dadurch gekennzeichnet, dass der feste Träger in Abhängigkeit davon, ob die umfliessende Flüssigkeit polare oder apolare Eigenschaften hat, durch physikalische Modifikation hydrophil oder hydrophob gemacht wird, beispielsweise durch Behandlung mit einer oberflächenaktiven Verbindung.

9. Verfahren nach Anspruch 1, dadurch gekennzeichnet, dass jede der Extraktionsflüssigkeiten ein chirales Adjuvans enthält, von denen jedes eine unterschiedliche Spiegelbildform besitzt.

10. Verfahren nach Anspruch 9, dadurch gekennzeichnet, dass jede der Extraktionsflüssigkeiten auf demselben Lösungsmittel basiert.

11. Verfahren nach Anspruch 1, dadurch gekennzeichnet, dass die Extraktionsflüssigkeiten polare Flüssigkeiten sind.

12. Verfahren nach Anspruch 11, dadurch gekennzeichnet, dass die trennende Phase eine apolare Flüssigkeit oder ein Gas ist.

13. Verfahren nach Anspruch 1, dadurch gekennzeichnet, dass die extrahierenden Flüssigkeiten apolare organische, mit Wasser nicht mischbare oder teilweise mit Wasser mischbare Flüssigkeiten sind.

14. Verfahren nach Anspruch 13, dadurch gekennzeichnet, dass die trennende Phase eine polare Flüssigkeit ist, insbesondere eine wässrige Phase.

**Revendications**

1. Un procédé de séparation d'énantiomères à partir d'un mélange racémique par extraction à contre-courant en utilisant au moins deux liquides dont l'un au moins est chiral ou contient un adjuvant chiral, caractérisé en ce que ces liquides sont totalement miscibles et séparés l'un de l'autre par une phase avec laquelle ils ne sont pas miscibles.

2. Un procédé selon la revendication 1, caractérisé en ce que la phase de séparation non-miscible est incorporée dans un support poreux solide.

3. Un procédé selon la revendication 1, caractérisé en ce que la phase de séparation est un liquide.

4. Un procédé selon la revendication 1, caractérisé en ce que la phase de séparation est un gaz.

5. Un procédé selon la revendication 1, caractérisé en ce que la phase de séparation non-miscible est une membrane continue solide, de préférence sous la forme de fibre creuse.

6. Un procédé selon la revendication 2, caractérisé en ce que le support poreux solide est une membrane microporeuse, de préférence sous la forme d'une fibre creuse.

7. Un procédé selon la revendication 5 ou 6, caractérisé en ce que le support solide, en fonction des propriétés polaires ou apolaires du liquide s'écoulant autour, est rendu hydrophile ou hydrophobe par voie chimique.

8. Un procédé selon la revendication 5 ou 6, caractérisé en ce que le support solide, en fonction des propriétés polaires ou apolaires du liquide s'écoulant autour, est rendu hydrophile ou hydrophobe par modification physique, par exemple par traitement avec un agent tensio-actif.

9. Un procédé selon la revendication 1, caractérisé en ce que chacun des liquides d'extraction contient un adjuvant chiral, chacun d'eux correspondant à une image différente dans un miroir.

10. Un procédé selon la revendication 9, caractérisé en ce que chacun des liquides d'extraction est constitué du même solvant.

11. Un procédé selon la revendication 1, caractérisé en ce que les liquides d'extraction sont des liquides polaires.

12. Un procédé selon la revendication 11, caractérisé en ce que la phase de séparation est un liquide apolaire ou un gaz.

13. Un procédé selon la revendication 1, caractérisé en ce que les liquides d'extraction sont des liquides apolaires, organiques, non-miscibles à l'eau ou partiellement miscible à l'eau.

14. Un procédé selon la revendication 13, caractérisé en ce que la phase de séparation est un liquide polaire, de préférence une phase aqueuse.

# FIG. 1

## FIG. 2

## FIG. 3

FIG. 4

# FIG. 5

# FIG. 6

## Bench scale with norephedrine

□  D-phase      +  L-phase

EP 0 663 897 B1